# FASCICULE DE BREVET EUROPEEN

(11) **EP 3 324 147 B1**
(45) Date de publication et mention de la délivrance du brevet: **07.02.2024**
(21) Numéro de dépôt: 17196404.2
(22) Date de dépôt: 13.10.2017
(51) Int. Cl.: F41G 5/16, F41G 3/02, F41G 3/16, F41G 3/06

(54) **DISPOSITIF VISUEL POUR LA DESIGNATION D'OBJECTIFS ET PROCEDE DE DESIGNATION D'OBJECTIF UTILISANT LEDIT DISPOSITIF**
VISUELLE VORRICHTUNG ZUR ZIELBESTIMMUNG, UND BESTIMMUNGSVERFAHREN VON ZIELEN, BEI DEM DIESE VORRICHTUNG ZUM EINSATZ KOMMT
VISUAL DEVICE FOR DESIGNATING LENSES AND LENS DESIGNATION METHOD USING SAID DEVICE

(30) Priorité: 14.10.2016 FR 1660002
(43) Date de publication de la demande: 23.05.2018
(73) Titulaire: Seaowl Technologies Solutions, 83500 La Seyne sur Mer (FR)
(72) Inventeur: GIRAUD, Marie-Annick, 83110 Sanary sur Mer (FR); BORG, Grégory, 83100 TOULON (FR); SANDOZ, Stéphane, 83130 La Garde (FR); ALHADEF, Bernard, 83330 Le Castelet (FR)
(74) Mandataire: Alatis

(56) Documents cités:
- FR-A1- 2 758 625
- FR-A1- 2 824 132
- FR-A1- 2 852 405
- FR-A1- 2 929 700
- Bernard Alhadef: "Quick Pointing Device", , 31 décembre 2014 (2014-12-31), pages 1-9, XP055408144, Extrait de l'Internet: URL:http://www.sofresud.com/content/downlo ad/852/4139/version/1/file/QPD - EN - Product Presentation.pdf [extrait le 2017-09-20]
- MORGERE JEAN CHRISTOPHE ET AL: "Mobile Augmented Reality System for Marine Navigation Assistance", 2014 12TH IEEE INTERNATIONAL CONFERENCE ON EMBEDDED AND UBIQUITOUS COMPUTING, IEEE, 26 août 2014 (2014-08-26), pages 287-292, XP032688484, DOI: 10.1109/EUC.2014.49

## Description

L'invention se rapporte à un dispositif pour la désignation d'objectifs ainsi qu'à un procédé de désignation d'objectif.

### EXPOSÉ DE L'INVENTION

Il existe des dispositifs de pointage pour la désignation d'objectifs destinés à fournir aux systèmes d'armes de navires armés ou de combat, les coordonnées angulaires dans l'espace de cibles aériennes, terrestres ou maritimes détectées visuellement par un opérateur en situation de veille susceptibles de constituer des menaces.

Ces dispositifs sont traditionnellement utilisés dans le cadre de la veille assurée par un opérateur de défense à vue. L'opérateur procède à l'acquisition de la cible en faisant coïncider l'objectif avec un point lumineux ou un réticule apparaissant dans le viseur et il désigne la cible en appuyant ensuite sur un bouton de validation.

Ce type de dispositifs constitue aujourd'hui, face à la montée des menaces asymétriques, un moyen indispensable d'autodéfense des navires militaires, comme dernier recours, et en complément des systèmes automatiques embarqués fonctionnant par détection électromagnétique (radars) et/ou optronique (tourelles infrarouges/visible).

Un tel dispositif, comme celui décrit dans le brevet FR2758625 et dénommé « DOU » « *Désignateur d'objectif d'Urgence* » ou QPD (« *Quick Pointing Device* ») comprend des moyens de visée constitués de trois gyromètres à fibres optiques (ou FOG « *Fiber Optics Gyrometer* ») et des moyens de traitement des signaux issus des moyens de visée. Les gyromètres permettent d'identifier les trois axes de rotation passant par la cible et d'en déduire sa direction dans un repère prédéfini de l'espace. Ces données sont transmises à un poste de contrôle et de commandement (par exemple, le Central Opérations d'un navire de combat) et permettent à des moyens d'action tels qu'une conduite de tir d'assurer une localisation et un suivi précis de la cible à surveiller et, le cas échéant, de la neutraliser.
Les documents FR2824132, FR2852405 et FR2929700 décrivent d'autres dispositifs de visée et de pointage de cibles présentant au moins certaines des caractéristiques définies dans le préambule de la revendication 1.

Afin de compenser la dérive des gyromètres, le dispositif doit être recalé sur son support à intervalles réguliers (au bout de quelques minutes) pour conserver sa précision ce qui nécessite d'interrompre la veille.

En outre, l'opérateur qui utilise ce dispositif portable doit pointer la cible en la faisant coïncider, dans les moyens de visées optiques, avec un point lumineux. Or, compte tenu de l'instabilité due aux mouvements de plate-forme, de la cinématique de la cible et des éventuels tremblements de l'opérateur, ce pointage par focalisation se révèle souvent insuffisamment précis et/ou difficile à exécuter. Cette difficulté est accrue en cas de mauvaise visibilité de surface, d'éblouissement, de réflexion spéculaire ou encore en situation nocturne car, dans de telles circonstances, l'acuité visuelle de l'opérateur et la précision du pointage se trouvent notablement diminuées.

Les dispositifs DOU (ou *QPD*) connus ne fournissent que la direction de la cible et la distance de la cible est alors le paramètre manquant pour suivre la cible avec précision et engager avec succès les éventuelles actions de neutralisation.

Par ailleurs, les dispositifs existants, s'ils offrent la possibilité d'ajouter des équipements additionnels de visée au pointeur DOU (tels que des jumelles à grossissement ou des capteurs à vision nocturne (thermique) ou à intensification de lumière) ne sont pas adaptés pour recevoir conjointement plusieurs équipements additionnels. L'ajout ou la permutation de ces équipements qui possèdent leur propre interface nécessite une action de montage / démontage mécanique qui entraîne une dégradation du simbleautage et réduit la précision de la visée.

En outre, les dispositifs DOU ne comportent ni moyens de communication permettant de transmettre des informations du poste de commandement à l'opérateur ni de moyens de communication permettant de faire remonter des observations de ce dernier vers le poste de commandement.

Enfin, les dispositifs connus ne comportent pas de moyens permettant d'enregistrer et de sauvegarder les séquences de désignation d'objectifs ce qui prive le commandement d'un retour d'expérience et de preuves juridiques.

Un aspect de l'invention vise à remédier à ces problèmes techniques en proposant un dispositif défini par l'objet de la revendication 1.

Selon un mode de réalisation préférentiel, le dispositif comprend, d'une part, un appareil de pointage portable intégrant l'organe de visée, l'unité gyroscopique, les moyens d'analyse des signaux issus de l'organe de visée ainsi que les moyens d'acquisition et d'affichage des images et, d'autre part, un boîtier de support pourvu des moyens de recalage de l'appareil de pointage.

Selon une variante spécifique, l'appareil de pointage comporte au moins une poignée de manoeuvre dotée d'un organe de commande reliée à au moins un élément tubulaire recevant lesdits moyens d'acquisition d'images et lesdits moyens d'affichage des images et portant un organe de fixation amovible de l'organe de visée directe.

Selon une variante particulière, l'appareil de pointage comporte deux poignées de manoeuvre sensiblement parallèles, inclinées vers le haut et vers l'avant en étant raccordées à deux organes tubulaires, respectivement, supérieur et inférieur d'axes longitudinaux parallèles.

Selon une autre variante avantageuse, les moyens de recalage comprennent un boîtier de support et de recalage mécanique de l'appareil de pointage pourvu de moyens de maintien amovible dudit appareil, d'un calculateur interne, d'une interface électronique de contact assurant la communication de l'appareil avec le poste de contrôle et de moyens d'alimentation électrique.

Selon une variante alternative, les moyens de recalage sont intégrés aux moyens de traitement d'images .

Selon une variante spécifique, les moyens de maintien comprennent un jeu de rainures longitudinales portées par les flancs de l'appareil de repérage et destinées à coopérer par coulissement avec un jeu de pions, au moins partiellement métalliques, portés par le fond du boîtier et assurant l'interface mécanique de contact avec ledit appareil.

Le cas échéant, l'appareil de repérage est muni d'une crosse.

De préférence, les deux poignées sont inclinées relativement aux axes des éléments tubulaires.

Selon une autre caractéristique, l'appareil de repérage comporte deux organes de commande, constitués respectivement, d'une gâchette et d'un manche.

Selon encore une autre caractéristique, les moyens d'acquisition des images comprennent au moins une caméra vidéo.

De préférence, ces moyens d'acquisition des images comprennent au moins deux caméras vidéo dont une caméra à vision nocturne, par exemple, une caméra infra-rouge ou une caméra à intensification de lumière.

Au moins l'une desdites caméras est équipée d'un zoom et d'un filtre de stabilisation de l'image.

Avantageusement, les moyens d'acquisition des images sont associés à des moyens d'enregistrement desdites images avec leur localisation et leur datation.

Selon une variante de réalisation, les moyens d'affichage des images comprennent un écran vidéo monté à proximité de l'organe de visée.

Il est avantageusement prévu, selon l'invention, que les moyens d'affichage puissent recevoir des informations provenant à la fois des moyens d'acquisition des images et du poste de contrôle distant.

Avantageusement, le dispositif comprend, en outre, un microphone et un haut-parleur et un vibreur
Selon encore une autre variante, l'unité gyroscopique comprend des capteurs MEM's combinant les gyromètres à des accéléromètres.

Avantageusement, l'organe de visée est associé à un télémètre laser permettant la mesure de la distance aux objectifs.

De préférence, il est prévu que les moyens d'acquisition d'images permettent leur fusion sur les moyens d'affichage.

Un autre aspect de l'invention concerne l'utilisation du dispositif de pointage selon l'une des revendications 1 à 21 par un opérateur à partir d'un navire ou d'une plate-forme offshore en vue de la détection et la neutralisation de cibles maritimes ou aérienne.

Le dispositif de pointage de l'invention fonctionne sur un mode intuitif et peut donc être qualifié de « *Intuitive Pointing Device* » ou IPD.

En exploitant les dernières avancées technologiques en traitement d'image, la vision augmentée, systèmes inertiels à base de FOGs (Fiber Optic Gyrometers) et/ou de MEMs (Micro-Electro-Mechanical Systems), le perfectionnement apporté par l'invention aux dispositifs de pointage ou de repérage traditionnels permet d'améliorer leurs qualités opérationnelles pour la désignation d'objectif d'urgence et d'être compatibles, d'une part, avec les systèmes de combats navals de dernière génération et, d'autre part, avec les futurs systèmes duaux de protection civile des navires marchands et des plateformes Offshore.

Disposant, en outre, de moyens de pointage et d'affichage intégrés à un appareil portable léger, compact et de faibles dimensions et, accessoirement, de moyens de support et de recalage ergonomiques sous forme d'un boîtier étanche le dispositif de l'invention est mieux équilibré et permet une utilisation plus intuitive par le personnel de veille.

Le dispositif de l'invention comprend un appareil de pointage et un boîtier de support et de recalage mécanique. Il peut être utilisé aussi bien dans un espace confiné qu'à l'extérieur. En plus des fonctions traditionnelles du DOU/QPD, que sont la vision optique directe permettant l'acquisition d'une cible et le calcul de la ligne de visée à partir des données du trièdre gyrométrique (utilisant des *FOGs* ou *MEMs*) permettant sa désignation, le dispositif de l'invention intègre un nouveau système de pointage améliorant l'usage opérationnel de la Désignation d'Objectif d'Urgence en offrant de nouvelles fonctionnalités.

L'appareil de pointage du dispositif de l'invention présente une ergonomie offrant une prise à une ou deux mains plus stable (du type arme légère) que les dispositifs traditionnels. En outre, la prise de vue vidéo permet de détecter la cible dans l'image proche du réticule et de s'y asservir par la poursuite de l'objectif dans l'image. Ce mode de poursuite permet ainsi de s'affranchir des tremblements de l'opérateur et des écarts de visée.

En outre, le dispositif d'acquisition d'objectif de l'invention permet de connaître non seulement la direction mais aussi la distance de la cible et d'engager ainsi les actions de neutralisation avec plus de précision.

Ce dispositif comprend aussi des moyens assurant la transmission en temps réel des prises de vues vidéo de l'objectif et des séquences audio à un central d'opérations distant et offrant la possibilité d'enregistrer et de visualiser à nouveau ces informations par la suite et, inversement, la transmission à l'opérateur d'informations d'assistance provenant de postes distants ou de senseurs avec des indicateurs facilitant le ralliement sur l'objectif sans interrompre son pointage.

Enfin, le dispositif de l'invention offre plusieurs options de correction de la dérive sans nécessité d'effectuer un recalage physique.

### BREVE DESCRIPTION DES FIGURES

D'autres caractéristiques et avantages de l'invention ressortiront à la lecture de la description qui va suivre, en référence aux figures annexées et détaillées ci-après.
La figure 1 est un schéma synoptique des moyens matériels constitutifs d'un mode de réalisation du dispositif de l'invention.
La figure 2 est un schéma synoptique des moyens fonctionnels d'un mode de réalisation du dispositif de l'invention.
La figure 3 est un schéma synoptique des moyens logiciels utilisés dans un mode de réalisation du dispositif de l'invention.
Les figures 4A et 4B sont des vues en perspective d'un mode de réalisation préférentiel de l'appareil de pointage utilisé dans le dispositif de l'invention.
Les figures 5A et 5B sont des vues, respectivement, de profil en éclaté partiel et en perspective d'un mode de réalisation préférentiel du boîtier de support et de recalage utilisé dans le dispositif de l'invention.

Pour plus de clarté, les éléments identiques ou similaires sont repérés par des signes de référence identiques sur l'ensemble des figures.

### DESCRIPTION DETAILLEE DE MODES DE REALISATION

Naturellement, les modes de réalisation illustrés par les figures présentées ci-dessus et décrits ci-après ne sont donnés qu'à titre d'exemples non limitatifs. Il est explicitement prévu que l'on puisse combiner entre eux ces différents modes pour en proposer d'autres.

Le dispositif de l'invention est destiné à la désignation d'objectifs, c'est à dire, notamment, à l'acquisition de la position et de la direction de cibles situées dans l'environnement d'un opérateur, en vue de leur surveillance et de leur neutralisation éventuelle.

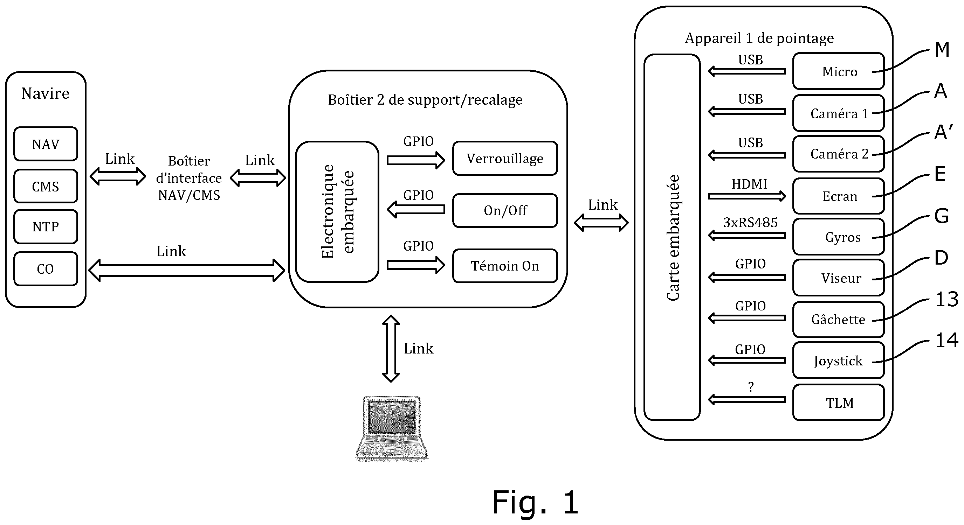

De manière générale et traditionnelle et comme illustré par le schéma de la figure 1, ce dispositif comprend un organe de visée directe D utilisé par un opérateur en situation de veille. Cet organe de visée est associé à une unité gyroscopique G (représentée schématiquement sur la figure 1) ou trièdre gyrométrique, à trois axes non-parallèles et, de préférence, sensiblement perpendiculaires entre eux et est couplé à des moyens d'analyse des signaux issus de la visée qui sont aptes à déterminer la direction entre l'organe de visée et la cible matérialisant l'objectif et à la transmettre à poste de contrôle et/ou de commandement distant doté de moyens d'action (conduite de tir,...).

Les références mentionnées sur la figure 1 correspondent aux éléments suivants :
CMS : *Combat management system* (gestionnaire du système de combat)
CO : PC ou Central Opérations
GPIO : *Général Purpose input*/*output* (entrées/sorties)
HDMI : *High definition multimedia interface*
Link : Liaison inter équipements (Ethernet, Bluetooth, Wifi, série...)
NAV : système de navigation du navire ( fournit notamment le cap, roulis, tangage du porteur)
NTP : *Network time protocol* (synchronisation des échanges horodatés)
USB : *Universal serial bus*

De préférence, l'unité gyroscopique G comprend un trièdre gyrométrique à base de capteurs FOG's ou MEM's éventuellement combinés à des accéléromètres (capteurs inertiels) et l'organe de visée D est, le cas échéant, associé à un télémètre laser permettant la mesure de la distance jusqu'à l'objectif ciblé.

Le dispositif de pointage comprend, en outre, des moyens d'acquisition d'images A assurant des prises de vue, de préférence vidéo, d'un ou de plusieurs objectifs successifs. Ces moyens d'acquisition d'images vidéo sont associés à l'organe de visée directe D et couplés à des moyens logiciels de traitement des images et à des moyens d'affichage E de ces images.

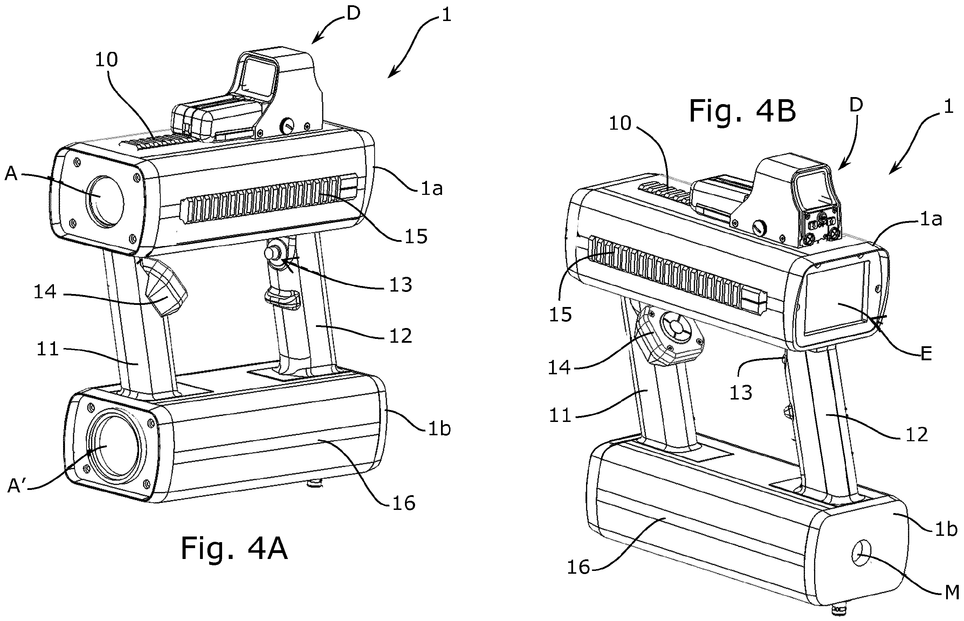

Dans le mode de réalisation illustré par les figures 4A et 4B, le dispositif de l'invention comprend un appareil de pointage portable 1 comportant au moins une et ici deux poignées 11, 12 de manoeuvre dotées d'au moins un organe de commande. Les poignées 11, 12 assurent la liaison avec au moins un élément tubulaire et ici un élément tubulaire supérieur 1a et un élément tubulaire inférieur 1b orientés selon deux axes longitudinaux parallèles. Au moins l'un de ces deux éléments et, ici l'élément supérieur 1a, reçoit les moyens d'acquisition A d'images et les moyens d'affichage E de ces images permettant leur visualisation en temps réel par l'opérateur.

L'élément supérieur 1a porte, en outre, des organes de fixation amovible et réglable 10 de l'organe de visée directe D et d'équipements additionnels. Ces organes de fixation sont constitués de rainures longitudinales crantées 15 formant des rails, par exemple du type « *Picatinny* » (Norme MIL-STD 1913 rail). Ces rails sont pourvus de connecteurs électriques permettant le raccordement complémentaire, sur l'élément tubulaire supérieur 1, d'équipement additionnels électroniques (figures 4A, 4B).

Dans une variante non représentée, l'appareil de pointage 1 est muni d'une crosse améliorant sa prise et sa stabilisation par appui sur l'épaule de l'opérateur.

Les deux poignées 11, 12 de l'appareil de pointage sont inclinées de bas en haut et vers l'avant relativement aux axes des éléments tubulaires, respectivement, supérieur 1a et inférieur 1b afin de faciliter la visée.

Les poignées portent ici deux organes de commande, constitués respectivement, d'une gâchette 13 et d'un manche court 14 du type *« joystick ».*

Les moyens d'affichage E des images sont constitués d'un écran vidéo monté à proximité de l'organe de visée D et ici à l'extrémité arrière de l'élément tubulaire supérieur 1a.

L'appareil de pointage comprend, en outre, un microphone M et un vibreur et, le cas échéant, un haut-parleur (non représentés) assurant la liaison audio avec d'autres postes et, notamment, le poste de commandement distant.

Les moyens d'acquisition A des images comprennent au moins une caméra vidéo dans le visible et, de préférence, au moins deux caméras vidéo A, A' dont l'une est une caméra à vision nocturne, (infra-rouge (IR) moyen (3-5 microns) ou lointain (8 - 12 microns),, caméra à intensification de lumière, caméra à large bande dans le visible et le proche infra-rouge (400 à 1100 nanomètres)). Selon l'invention, il est prévu qu'au moins l'une de ces caméras soit équipée d'un zoom et d'un filtre de stabilisation de l'image.

Ces moyens d'acquisition d'images vidéo (diurnes, nocturnes) coopèrent avec des systèmes inertiels à base de FOGs (*Fiber Optic Gyrometers*) et/ou de MEMs (*Micro-Electro-Mechanical Systems*) permettant la stabilisation des images et travaillent en liaison avec les moyens de traitement de ces images qui comprennent un calculateur embarqué exploitant des algorithmes de traitement d'images (tels que la bibliothèque Open CV - marque déposée) et conduisant ainsi à une vision dite « augmentée ».

Il est prévu que les moyens de traitement d'images permettent la fusion de plusieurs images de la même scène sous forme d'une image composite de synthèse visualisée sur les moyens d'affichage E.

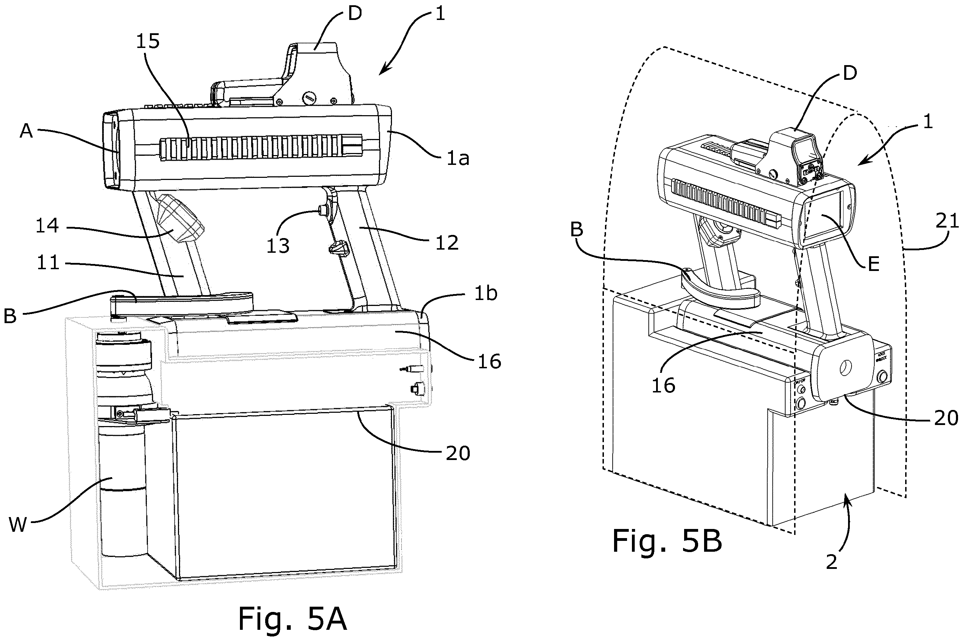

L'appareil de pointage 1 et, notamment, l'organe de visée D est aussi couplé à des moyens de recalage de l'unité gyroscopique. Ces moyens de recalage peuvent être mécaniques et sont alors logés dans un boîtier 2, éventuellement étanche, dont un mode de réalisation est illustré par les figures 5A et 5B.

Le boîtier 2 est pourvu d'un capot 21 et est fixé sur le pont du navire ou sur une base fixe si l'appareil est destiné à une application terrestre. Ce boîtier est apte et destiné à assurer le support temporaire, à fin de recalage, de l'appareil de pointage 1 en étant pourvu, à cet effet, de moyens de maintien amovible. Le boîtier 2 est équipé, en outre, d'un calculateur interne, d'une interface électronique de contact assurant la communication de l'appareil de pointage 1 avec le poste de contrôle distant et de moyens d'alimentation électrique (non représentés).

Toutefois, ces moyens de recalage peuvent alternativement être intégrés aux moyens d'acquisition d'images A et le boîtier 2 n'assure alors plus que des fonctions de support, de recharge de la batterie interne de l'appareil de pointage (si celui-ci est autonome et sans fil) et de stockage étanche et/ou de recalage de sauvegarde

Plus précisément, les capteurs gyrométriques dérivent dans le temps et nécessitent d'être recalés dans un support fixe fournissant ainsi une position de référence. Selon un mode de mise en oeuvre de l'invention utilisant un recalage mécanique, ce support fixe est constitué du boîtier 2. Le recalage mécanique est alors assuré par la coopération entre, d'une part, deux rainures femelles 16 en V s'étendant parallèlement et de part et d'autre, sur les flancs de l'élément tubulaire inférieur 1b de l'appareil de pointage 1 et, d'autre part, deux pions sphériques mâles (non visibles sur les figures) portés par les parois intérieures du boîtier 2 de support et coulissant dans les rainures 16. Une variante non représentée consisterait à remplacer l'une des rainures par un orifice cylindrique dans lequel vient s'engager l'un des pions. En vue d'assurer l'interface électronique de contact entre le boîtier 2 et l'appareil de pointage 1, les pions sont au moins partiellement métalliques et sont raccordés aux moyens de recalage extérieurs.

En position de recalage, l'appareil 1 repose dans un berceau 20 du boîtier 2 épousant l'élément tubulaire inférieur 1b (visible en éclaté sur la figure 5A) qui vient en butée vers l'avant contre un épaulement. L'appareil 1 est totalement immobilisé dans une position verrouillée par l'action d'un bras B pivotant pour venir crocheter la poignée 11. Le bras B est mû en rotation par des galets (ou une courroie) actionnés au moyen d'un bloc moteur électrique W (enfermé dans le boîtier mais visible sur la figure 5A) et est actionné automatiquement lorsque l'appareil de pointage 1 est placé dans le boîtier 2. L'appui sur l'un des organes de commande 13 ou 14 de l'appareil de pointage 1, entraine le déverrouillage automatique du bras B et la libération de l'appareil de pointage 1

La détection de présence de l'appareil de pointage 1 dans le boîtier 2 est réalisée au moyen d'un détecteur situé entre les deux pions mâles, ce détecteur pouvant éventuellement être sans contact.

Afin d'améliorer le confort d'emploi du dispositif de l'invention et d'augmenter sa disponibilité opérationnelle, il est prévu d'installer plusieurs boîtiers fixes de support et de recalage, à l'intérieur du bord et à l'extérieur.

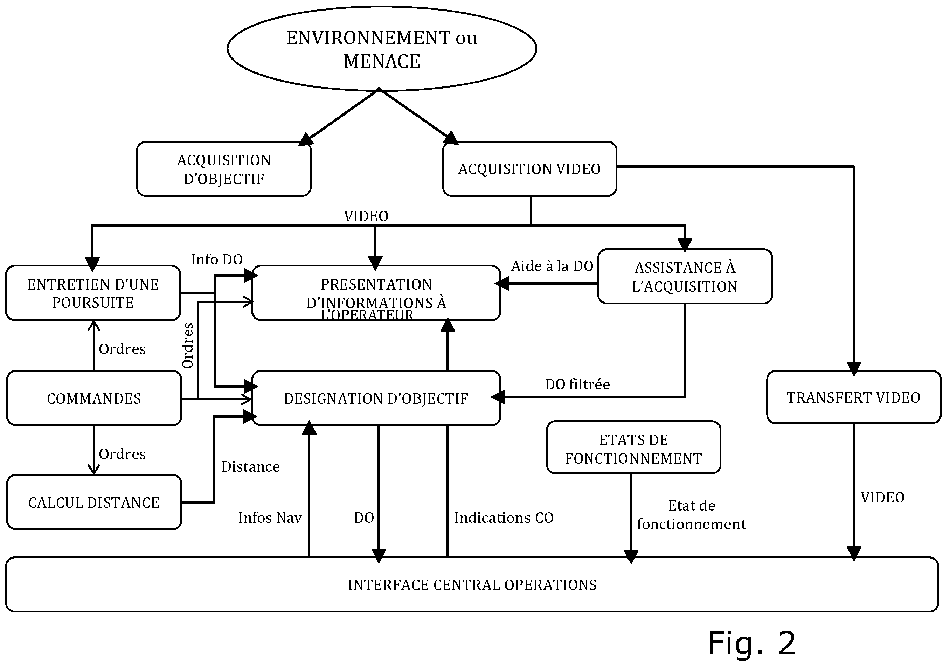

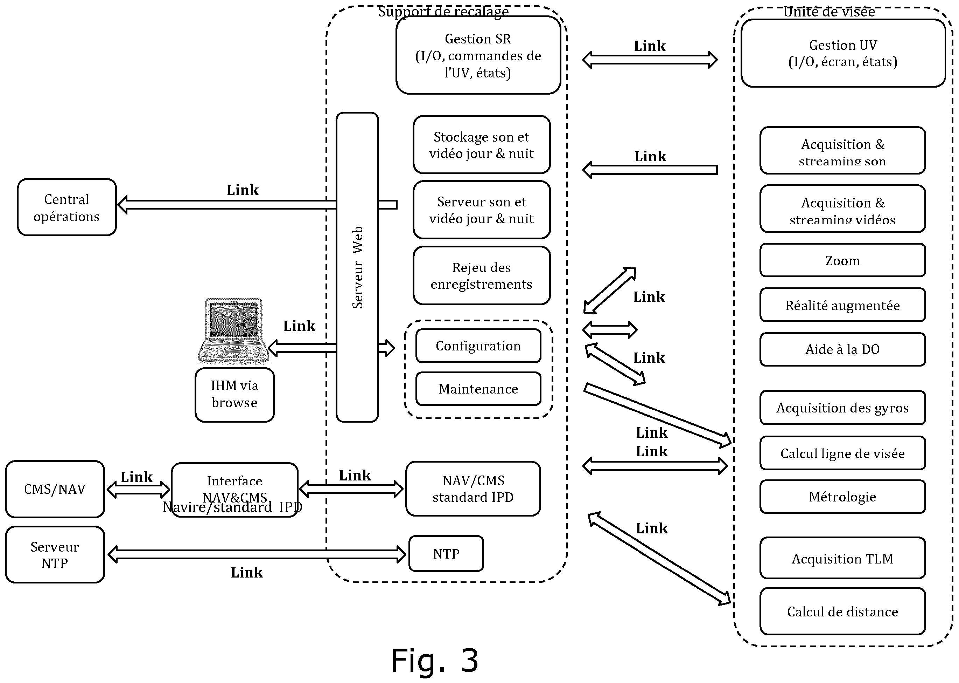

Le mode de désignation d'objectif utilisant le dispositif de pointage de l'invention va maintenant être décrit en détail et en complément aux figures 2 et 3.

### Calcul de l'attitude du pointeur à partir de MEMs et/ou de FOGs.

Le calcul continu en temps réel de l'attitude de l'appareil de pointage peut s'appuyer sur les données issues d'un trièdre FOGs ou MEMs comme cela est le cas sur les dispositifs QPD.

Cependant, les performances de certains capteurs à technologie MEMs comprenant un trièdre gyrométrique et des accéléromètres autorisent l'utilisation de ces capteurs dans le dispositif de pointage de l'invention bien que pénalisés par une dérive dans le temps plus importante que les FOGs. Une telle utilisation mixte basée sur une technologie MEMs comprenant trois gyromètres et trois accéléromètres couplés à un gyromètre à fibre optique offre l'intérêt de limiter la dérive importante des gyromètres MEMS avec les accéléromètres en roulis / tangage et avec le FOG en cap.

### Visualisation des images vidéo sur l'écran de l'appareil de pointage.

Le dispositif de l'invention offre la possibilité à l'opérateur de visualiser trois types de vidéos sur l'écran E dit « *sunlight-readable »* en temps réel, l'opérateur pouvant basculer de l'une à l'autre de manière intuitive avec une capacité de zoom. Cette fonctionnalité s'ajoute à la vision directe au travers de l'organe de visée D projetant un réticule à l'infini. Suivant le besoin opérationnel, la vidéo acquise par une caméra diurne classique ou une caméra de haute sensibilité couvrant du visible au proche IR (400/1100 nm), couleur ou monochrome, est affichée sur l'écran E et visualisée par l'opérateur. Toujours en fonction des besoins opérationnels, la vidéo acquise par une caméra IR non refroidie (8/12 microns) ou une caméra à intensification de lumière est présentée à l'opérateur.

Un autre mode de visualisation repose sur la fusion d'images. Ce mode a pour objectif d'utiliser la complémentarité de l'information obtenue dans différentes bandes spectrales (visible couleur et infrarouge par exemple) pour proposer à l'opérateur une information enrichie et ainsi améliorer ses possibilités de détection et d'identification de la cible.

### Détection et « tracking » d'une cible dans l'image.

La puissance d'analyse des ordinateurs et les évolutions des algorithmes de traitement d'image autorisent des calculs temps réel améliorant fortement les fonctionnalités opérationnelles. Le dispositif de l'invention utilise donc pleinement ces technologies pour intégrer des algorithmes de détection et de tracking appliqués au domaine maritime. Dans le cas spécifique d'images prises dans le domaine maritime, la présence de réflexion spéculaire, de vagues, d'écume ou le sillage de navires, ne permettent pas une modélisation satisfaisante du fond y compris par des modèles statistiques comme cela est classiquement le cas. Cette problématique nécessite l'utilisation d'algorithmes spécifiques adaptés respectivement à la détection des navires proches et des navires lointains.

### Réalité augmentée.

L'incrustation des données tactiques sur l'image vue par l'opérateur permet de le guider. Par exemple, l'information extraite à partir du trièdre gyrométrique et directement présentée sur les images affichées sur l'écran E de l'appareil de pointage 1 et sur le poste déporté d'un centre opérationnel, apportera une aide à la compréhension de la situation tactique pour les opérateurs.

Parmi les paramètres affichables, citons : un réticule ajustable au centre de l'image, le site et l'azimut du centre de l'image, les objets de surface détectés détourés, les informations d'environnement (noms des navires alentours, lorsque ces derniers sont connus par la réception d'un message AIS par exemple, etc.) ou toute information d'aide à la désignation d'objectif en provenance, par exemple, d'un central d'opérations ou d'un senseur distant. Les informations sont visualisées sur l'écran E de l'appareil de pointage 1 sans générer de perturbation sur l'action en cours relative à l'utilisation du dispositif.

### Stabilisation de la visée.

La stabilisation de la visée s'appuie, d'une part, sur l'application d'un filtre classique de stabilisation de l'image et des données issues du trièdre gyrmétrique pour éliminer le « *tremblé* » opérateur en temps réel et d'autre part sur le « *tracking* » de la cible désignée par l'opérateur dans l'image.

Dans ce dernier cas, l'opérateur place la cible au centre de l'image au niveau du réticule et valide, par appui sur la gâchette par exemple, pour désigner la cible ; le « tracking » de la cible dans l'image offre alors une meilleure stabilité de la visée par rapport à un opérateur qui essaie de maintenir la cible au centre du réticule.

### Transmission en direct des prises de vue.

Les images vidéo vues sur l'écran E par l'opérateur, ses commentaires et les bruits ambiants sont transmis en direct à un central d'opérations ou à un poste distant. Les séquences sonores sont captées par un micro directement intégré à l'appareil de pointage. Le dispositif est également conçu pour effectuer l'enregistrement des images vidéo et des bandes sonores et permettre leur lecture et/ou leur exportation à des fins d'analyse.

### Information de distance.

L'information de distance de l'objectif, associée à la ligne de visée obtenue par l'exploitation des données gyromètriques, permet de passer d'une désignation 2D à une localisation 3D de la cible.

L'obtention de la distance peut être réalisée par l'ajout d'un télémètre laser sur l'appareil de pointage, associé à un filtre dont l'objectif est d'écarter les valeurs aberrantes, de pallier l'absence ponctuel de mesure et de se synchroniser au calcul de la ligne de visée.

Une alternative pour la mesure de l'information de distance, qui peut être complémentaire de la solution ci-dessus, consiste à estimer la distance d'une cible de surface à partir d'un algorithme de poursuite de distance utilisant les désignations d'objectif précédentes et successives effectuées avec le même dispositif et l'altitude de l'appareil de pointage par rapport au niveau de la mer.

### Asservissement des moyens d'action.

L'asservissement des moyens d'action et de neutralisation de l'objectif (une tourelle de tir, par exemple) est effectué à partir des données angulaires et de distance de la visée grâce à une algorithmie en temps réel permettant, d'une part, d'atteindre la précision requise et, d'autre part, le niveau de sécurité nécessaire.

Dans le cadre du pilotage d'une pièce d'artillerie, le dispositif intègre des calculs de balistique principale / but futur en s'appuyant notamment sur des tables de tir de l'arme et de balistique secondaire qui utilise la vitesse réelle du vent diminuée du vent relatif crée par le mouvement du tireur. Des corrections peuvent également être apportées en considérant la vitesse d'entrainement du canon due aux mouvements de translation et de rotation du navire autour du point tranquille.

### Recalage automatique du dispositif en dehors de son boîtier de support et de recalage.

Une autre possibilité de recalage automatique de l'appareil de pointage consiste à comparer les données fournies par la centrale de navigation du navire avec celles mesurées par le trièdre gyromètrique G lorsque l'appareil de pointage 1 est maintenu immobile par rapport au navire et que le trièdre mesure seulement ses mouvements d'attitude.

### Calcul des biais du boîtier de support et de recalage par rapport au référentiel du navire.

Le support de recalage mécanique doit être aligné par rapport au référentiel du navire afin de déterminer ses biais en cap, roulis et tangage. Ce processus a généralement lieu pendant les phases d'installation du dispositif et nécessite l'utilisation d'un senseur de référence préalablement aligné ou l'utilisation d'un théodolite pour déterminer des points de référence dans l'environnement. Une voie d'amélioration consiste à calculer automatiquement la position du boîtier de support et de recalage quand le navire est en route, par analyse de la centrale de navigation et comparaison avec les données gyromètriques de l'appareil de pointage 1 enfermé et fixé dans le boîtier 2.

Si toutefois le navire ne dispose pas d'une centrale de navigation, il est possible de l'équiper de l'équivalent d'une telle centrale de mesure par un, ou mieux deux modules éloignés (pour avoir la direction). Ces boîtiers de mesure contiennent des capteurs de type GPS, MEMS, magnétomètre, accéléromètre.

### Recalage de la centrale gyromètrique grâce à un système de vision stéréo.

La détection et le suivi de points particuliers dans deux images provenant de deux caméras distinctes dont le positionnement relatif ainsi que les paramètres intrinsèques (niveau de zoom, taille du capteur) sont connus, permettent d'en estimer la distance. Il devient alors possible, par le suivi dans le temps de ces points remarquables, de reconstituer le déplacement du support des caméras et donc de recaler en temps réel la centrale gyromètrique G du système. L'approche envisagée consiste donc à positionner, sur l'appareil de pointage 1, un couple de caméras qui fournissent des informations exploitables à l'aide des techniques de vision pour en déterminer le déplacement.

Une deuxième option consiste à recaler la trajectoire sur elle-même aux points de recoupement de la trajectoire (ou points de rendez-vous). Cette stratégie est notamment utilisée dans la problématique de construction d'une mosaïque d'images. Une approche similaire permet d'éliminer totalement la dérive lorsque l'appareil de pointage 1 est immobile. Dans ce cas, en effet, il est possible de calculer directement le positionnement relatif entre des instants très éloignés et d'éliminer de ce fait des erreurs cumulatives résultant de l'intégration.

### Collaboration entre les informations saisies par l'appareil de pointage et les informations émises par le poste de contrôle et/ou du système de commandement

Le poste de commandement central détient les pistes des différents mobiles détectés (terrestres, aériens, de surface ou sous-marins) ainsi que la cartographie. Ces pistes peuvent être fusionnées avec celles de l'appareil de pointage et permettent, d'une part, de recaler la dérive des capteurs inertiels (unité gyromètrique ou accéléromètre) en prenant comme référence les coordonnées données par le système de commandement et, d'autre part, permettent d'accroitre les précisions relatives entre les objectifs détectés par le système de commandement et ceux uniquement détectés par l'appareil de pointage.

Pour le cas particulier de cibles terrestres, la cartographie avec ses points remarquables permet de mieux positionner, sans dérive, l'objectif désigné par l'appareil de pointage.

Dans le cas particulier de menaces en environnement urbain, le détourage des immeubles obtenu par l'acquisition d'images, permet d'indiquer avec précision la localisation de la menace (sniper, ...)

### Recalage grâce aux astres ou à des points géographiques remarquables

La connaissance de la position exacte de l'appareil de pointage relativement aux astres ou à des points géographiques remarquables et à l'acquisition des images permet le recalage des capteurs inertiels.

## Revendications

1. Dispositif portable de pointage (1) pour l'acquisition et la désignation d'objectifs ciblés par un opérateur à partir d'un navire ou d'une plate-forme offshore, ledit dispositif comprenant une unité gyroscopique (G) pourvue d'un trièdre gyrométrique à trois axes non parallèles entre eux et de capteurs inertiels, ladite unité étant couplée,
- d'une part, à des moyens d'analyse des signaux issus de l'unité gyroscopique (G), lesdits moyens étant aptes à déterminer la direction desdits objectifs et à la transmettre à un poste de contrôle distant doté de moyens d'action et,
- d'autre part, à des moyens de recalage (2) de l'unité gyroscopique (G),
**caractérisé en ce qu'**il comprend, en outre, des moyens d'acquisition (A) d'images assurant la prise de vue des objectifs et des moyens d'affichage (E) lesdits moyens d'acquisition étant couplés,
- d'une part, à, des moyens logiciels de traitement en temps réel des images assurant la fusion de ces images et comprenant à la fois, des algorithmes de détection assurant l'acquisition desdits objectifs et des algorithmes de poursuite précisant la direction entre le dispositif et lesdits objectifs et,
- d'autre part, aux moyens d'affichage (E) des images traitées par lesdits moyens logiciels contenant les objets de surface détectés et détourés et sur lesquelles sont incrustées des informations extraites des signaux issus de l'unité gyroscopique (G) et destinées à améliorer la désignation d'objectif.

2. Dispositif selon la revendication précédente, **caractérisé en ce qu'**il comprend au moins une poignée de manoeuvre (11, 12) dotée d'un organe de commande reliée à au moins un élément tubulaire (1a, 1b) recevant lesdits moyens d'acquisition (A) et lesdits moyens d'affichage (E) des images et portant un organe de fixation amovible.

3. Dispositif selon la revendication précédente, **caractérisé en ce que** ladite poignée (11, 12) est inclinée relativement à l'axe de l'élément tubulaire (1a, 1b).

4. Dispositif selon l'une des revendications 2 ou 3, **caractérisé en ce qu'**il comprend deux organes de commande, constitués respectivement, d'une gâchette (13) et d'un manche (14).

5. Dispositif selon l'une des revendications 2 à 4, **caractérisé en ce qu'**il comprend deux poignées de manoeuvre sensiblement parallèles, inclinées vers le haut et vers l'avant en étant raccordées à deux organes tubulaires, respectivement, supérieur (1a) et inférieur (1b) d'axes longitudinaux parallèles.

6. Dispositif selon l'une des revendications précédentes , **caractérisé en ce que** lesdits moyens de recalage comprennent un boîtier obturable (2) de support et de recalage mécanique pourvu de moyens de maintien amovible dudit dispositif, d'un calculateur interne, d'une interface électronique de contact assurant la communication dudit dispositif avec le poste de contrôle et de moyens d'alimentation électrique.

7. Dispositif selon la revendication précédente, **caractérisé en ce que** lesdits moyens de maintien comprennent un jeu de rainures longitudinales portées par les flancs de l'appareil de pointage (1) et destinées à coopérer par coulissement avec un jeu de pions, au moins partiellement métalliques, portés par les parois intérieures et/ou le fond du boîtier (2) et assurant l'interface électronique de contact avec ledit dispositif de pointage (1).

8. Dispositif selon l'une des revendications précédentes, **caractérisé en ce que** lesdits moyens de recalage sont intégrés aux moyens logiciels de traitement des images.

9. Dispositif selon l'une des revendications précédentes, **caractérisé en ce qu'**il est muni d'une crosse.

10. Dispositif selon l'une des revendications précédentes, **caractérisé en ce que** lesdits moyens d'acquisition (A) des images sont associés à un organe de visée directe (D).

11. Dispositif selon la revendication précédente, **caractérisé en ce que** lesdits moyens d'affichage (E) des images comprennent un écran vidéo monté à proximité de l'organe de visée directe (D).

12. Dispositif selon l'une des revendications précédentes, **caractérisé en ce que** lesdits moyens d'acquisition (A) des images comprennent au moins une caméra vidéo.

13. Dispositif selon la revendication précédente, **caractérisé en ce que** lesdits moyens d'acquisition (A) des images comprennent au moins deux caméras vidéo dont une caméra à vision nocturne.

14. Dispositif selon l'une des revendications précédentes, **caractérisé en ce que** lesdits moyens d'acquisition (A) des images sont associés à des moyens d'enregistrement desdites images avec leur localisation et leur datation.

15. Dispositif selon l'une des revendications précédentes, **caractérisé en ce que** lesdits moyens d'affichage (E) reçoivent des informations provenant à la fois des moyens d'acquisition (A) des images et du poste de contrôle distant.

16. Dispositif selon l'une des revendications précédentes, **caractérisé en ce qu'**il comprend, en outre, un microphone et un haut-parleur.

17. Dispositif selon l'une des revendications précédentes, **caractérisé en ce que** ladite unité gyroscopique (G) comprend des gyromètres à fibres optiques (FOG).

18. Dispositif selon l'une des revendications 1 à 16, **caractérisé en ce que** ladite unité gyroscopique (G) comprend des capteurs micro électro mécaniques (MEMs).

19. Dispositif selon l'une des revendications précédentes, **caractérisé en ce qu'**il comprend un télémètre laser permettant la mesure de la distance aux objectifs.

20. Dispositif selon l'une des revendications précédentes, **caractérisé en ce qu'**il comprend des moyens d'asservissement à une pièce d'artillerie.

21. Dispositif selon la revendication précédente, **caractérisé en ce que** lesdits moyens d'asservissement intègrent des moyens de calcul balistique.

22. Utilisation du dispositif de pointage selon l'une des revendications 1 à 21 par un opérateur à partir d'un navire ou d'une plate-forme offshore en vue de la détection et la neutralisation de cibles maritimes, terrestres ou aériennes.

## Patentansprüche

1. Tragbare Zielvorrichtung (1) für die Erfassung und die Bestimmung von Zielen, die durch einen Bediener von einem Wasserfahrzeug oder einer Offshore-Plattform aus anvisiert werden, die Vorrichtung umfassend eine Kreiseleinheit (G), die mit einem gyrometrischen Dreieck mit drei zueinander nicht parallelen Achsen und mit Trägheitssensoren versehen ist, wobei die Einheit gekoppelt ist:
- einerseits mit Mitteln zur Analyse der von der Kreiseleinheit (G) ausgehenden Signale, wobei die Mittel geeignet sind, um die Richtung der Ziele zu ermitteln und sie an eine entfernte Kontrollstelle zu übermitteln, die mit Aktionsmitteln ausgestattet ist, und
- andererseits mit Mitteln (2) zur Korrektur der Kreiseleinheit (G),
**dadurch gekennzeichnet, dass** sie ferner Mittel (A) zur Erfassung von Bildern, die die Aufnahme der Ziele gewährleisten, und Anzeigemittel (E) umfasst, wobei die Erfassungsmittel gekoppelt sind:
- einerseits an Softwaremittel zur Echtzeitverarbeitung von Bildern, die das Zusammenführen dieser Bilder sicherstellen und umfassend zugleich Registrierungsalgorithmen, die die Erfassung der Ziele sicherstellen, und Verfolgungsalgorithmen, die die Richtung zwischen der Vorrichtung und den Zielen genau angeben, und
- andererseits an die Mittel (E) zur Anzeige der durch die Softwaremittel verarbeiteten Bilder, die die registrierten und abgelenkten Oberflächeninhalte enthalten und auf denen Informationen eingebettet sind, die aus den von der Kreiseleinheit (G) ausgehenden Signalen extrahiert wurden und die dazu bestimmt sind, die Zielbestimmung zu verbessern.

2. Vorrichtung nach dem vorstehenden Anspruch,
**dadurch gekennzeichnet, dass** sie mindestens einen Bedienungshebel (11, 12) umfasst, der mit einem Steuerorgan ausgestattet ist, das mit mindestens einem röhrenförmigen Element (1a, 1b) verbunden ist, das die Mittel (A) zur Erfassung und die Mittel (E) zur Anzeige der Bilder aufnimmt und ein abnehmbares Befestigungsorgan trägt.

3. Vorrichtung nach dem vorstehenden Anspruch,
**dadurch gekennzeichnet, dass** der Hebel (11, 12) relativ zu der Achse des röhrenförmigen Elements (1a, 1b) geneigt ist.

4. Vorrichtung nach einem der Ansprüche 2 oder 3,
**dadurch gekennzeichnet, dass** sie zwei Steuerorgane umfasst, die jeweils aus einem Auslöser (13) und einem Halter (14) bestehen.

5. Vorrichtung nach einem der Ansprüche 2 bis 4,
**dadurch gekennzeichnet, dass** sie zwei im Wesentlichen parallele Bedienungshebel umfasst, die nach oben und nach vorne geneigt sind, indem sie mit zwei röhrenförmigen Organen, einem oberen (1a) beziehungsweise einem unteren (1b), mit parallelen Längsachsen verbunden sind.

6. Vorrichtung nach einem der vorstehenden Ansprüche,
**dadurch gekennzeichnet, dass** die Mittel zur Korrektur ein verschließbares Gehäuse (2) zum Tragen und zur mechanischen Korrektur umfassen, das mit Mitteln zum abnehmbaren Halten der Vorrichtung, einem internen Rechner, einer elektronischen Kontaktschnittstelle, die die Kommunikation der Vorrichtung mit der Kontrollstelle gewährleistet, und Mitteln zur Stromversorgung versehen ist.

7. Vorrichtung nach dem vorstehenden Anspruch,
**dadurch gekennzeichnet, dass** die Haltemittel einen Satz von Längsnuten umfassen, die durch Flanken der Zieleinrichtung (1) getragen werden und dazu bestimmt sind, gleitend mit einem Satz von mindestens teilweise metallischen Stiften zusammenzuwirken, die durch die Innenwände und/oder den Boden des Gehäuses (2) getragen werden und die elektronische Schnittstelle für den Kontakt mit der Zielvorrichtung (1) gewährleisten.

8. Vorrichtung nach einem der vorstehenden Ansprüche,
**dadurch gekennzeichnet, dass** die Korrekturmittel in die Softwaremittel zur Bildverarbeitung integriert sind.

9. Vorrichtung nach einem der vorstehenden Ansprüche,
**dadurch gekennzeichnet, dass** sie mit einem Griff versehen ist.

10. Vorrichtung nach einem der vorstehenden Ansprüche,
**dadurch gekennzeichnet, dass** die Mittel (A) zur Erfassung der Bilder mit einem Sichtlinienorgan (D) verbunden sind.

11. Vorrichtung nach dem vorstehenden Anspruch,
**dadurch gekennzeichnet, dass** die Mittel (E) zur Anzeige der Bilder einen Videobildschirm umfassen, der in der Nähe des Sichtlinienorgans (D) angebracht ist.

12. Vorrichtung nach einem der vorstehenden Ansprüche,
**dadurch gekennzeichnet, dass** die Mittel (A) zur Erfassung der Bilder mindestens eine Videokamera umfassen.

13. Vorrichtung nach dem vorstehenden Anspruch,
**dadurch gekennzeichnet, dass** die Mittel (A) zur Erfassung der Bilder mindestens zwei Videokameras umfassen, von denen eine eine Nachtsichtkamera ist.

14. Vorrichtung nach einem der vorstehenden Ansprüche,
**dadurch gekennzeichnet, dass** die Mittel (A) zur Erfassung der Bilder mit Mitteln zur Aufzeichnung der Bilder mit ihrem Standort und ihrer Datierung verknüpft sind.

15. Vorrichtung nach einem der vorstehenden Ansprüche,
**dadurch gekennzeichnet, dass** die Anzeigemittel (E) Informationen zugleich von den Mitteln (A) zur Erfassung der Bilder und von der entfernten Kontrollstelle empfangen.

16. Vorrichtung nach einem der vorstehenden Ansprüche,
**dadurch gekennzeichnet, dass** sie zusätzlich ein Mikrofon und einen Lautsprecher umfasst.

17. Vorrichtung nach einem der vorstehenden Ansprüche,
**dadurch gekennzeichnet, dass** die Kreiseleinheit (G) faseroptische Gyrometer (FOG) umfasst.

18. Vorrichtung nach einem der Ansprüche 1 bis 16,
**dadurch gekennzeichnet, dass** die Kreiseleinheit (G) mikroelektromechanische Sensoren (MEMs) umfasst.

19. Vorrichtung nach einem der vorstehenden Ansprüche,
**dadurch gekennzeichnet, dass** sie einen Laserentfernungsmesser umfasst, der die Messung der Entfernung zu den Zielen ermöglicht.

20. Vorrichtung nach einem der vorstehenden Ansprüche,
**dadurch gekennzeichnet, dass** sie Mittel zum Rückführen an ein Geschütz umfasst.

21. Vorrichtung nach dem vorstehenden Anspruch,
**dadurch gekennzeichnet, dass** die Rückführmittel ballistische Berechnungsmittel integrieren.

22. Verwendung der Zielvorrichtung nach einem der Ansprüche 1 bis 21 durch einen Bediener von einem Schiff oder einer Offshore-Plattform aus, mit dem Ziel der Registrierung und der Neutralisierung von See-, Land- oder Luftzielen.

## Claims

1. Portable aiming device (1) for the acquisition and the designation of objectives targeted by an operator from a ship or an offshore platform, said device comprising a gyroscopic unit (G) provided with a gyrometric trihedron having three axes that are not parallel to one another and with inertial sensors, said unit being coupled
- firstly to means for analyzing the signals from the gyroscopic unit (G), said means being capable of determining the direction of said objectives and transmitting said direction to a remote control station equipped with action means, and
- secondly to means (2) for recalibrating the gyroscopic unit (G),
**characterized in that** said device further comprises means (A) for acquiring images which capture the objectives, and display means (E), said acquisition means being coupled
- firstly to software means for the real-time processing of the images which merge these images together and comprise both detection algorithms which acquire said objectives and tracking algorithms which specify the direction between the device and said objectives, and
- secondly to the means (E) for displaying the images processed by said software means, which images contain the detected and routed surface objects and on which images information which is extracted from the signals from the gyroscopic unit (G) and intended to improve the objective designation is embedded.

2. Device according to the preceding claim, **characterized in that** it comprises at least one operating handle (11, 12) provided with a control member connected to at least one tubular element (1a, 1b) which receives said means (A) for acquiring the images and said means (E) for displaying the images and carries a removable fastening member.

3. Device according to the preceding claim, **characterized in that** said handle (11, 12) is inclined relative to the axis of the tubular element (1a, 1b).

4. Device according to either claim 2 or claim 3, **characterized in that** it comprises two control members, consisting respectively of a trigger (13) and a control stick (14).

5. Device according to any of claims 2 to 4, **characterized in that** it comprises two substantially parallel operating handles, inclined upward and forward while connected to two tubular members, namely an upper tubular member (1a) and a lower tubular member (1b), which have parallel longitudinal axes.

6. Device according to any of the preceding claims, **characterized in that** said recalibration means comprise a closable housing (2) for providing support and mechanical recalibration and provided with means for removably holding said device, with an internal computer, with an electronic contact interface which provides for the communication of said device with the control station, and with electrical supply means.

7. Device according to the preceding claim, **characterized in that** said holding means comprise a set of longitudinal grooves carried by the flanks of the aiming apparatus (1) and intended to cooperate, by sliding, with a set of at least partially metal pins which are carried by the inner walls and/or the bottom of the housing (2) and provide the electronic contact interface with said aiming device (1).

8. Device according to any of the preceding claims, **characterized in that** said recalibration means are integrated in the software means for processing the images.

9. Device according to any of the preceding claims, **characterized in that** it is provided with a stock.

10. Device according to any of the preceding claims, **characterized in that** said means (A) for acquiring the images are associated with a direct sighting member (D).

11. Device according to the preceding claim, **characterized in that** said means (E) for displaying the images comprise a video screen mounted near the direct sighting member (D).

12. Device according to any of the preceding claims, **characterized in that** said means (A) for acquiring the images comprise at least one video camera.

13. Device according to the preceding claim, **characterized in that** said means (A) for acquiring the images comprise at least two video cameras, including a night vision camera.

14. Device according to any of the preceding claims, **characterized in that** said means (A) for acquiring the images are associated with means for recording said images with their location and their date.

15. Device according to any of the preceding claims, **characterized in that** said display means (E) receive information from both the means (A) for acquiring the images and the remote control station.

16. Device according to any of the preceding claims, **characterized in that** it further comprises a microphone and a speaker.

17. Device according to any of the preceding claims, **characterized in that** said gyroscopic unit (G) comprises fiber-optic gyroscopes (FOG).

18. Device according to any of claims 1 to 16, **characterized in that** said gyroscopic unit (G) comprises micro-electromechanical sensors (MEMs).

19. Device according to any of the preceding claims, **characterized in that** it comprises a laser telemeter for measuring the distance to the objectives.

20. Device according to any of the preceding claims, **characterized in that** it comprises means for the servocontrol of an artillery piece.

21. Device according to the preceding claim, **characterized in that** said servocontrol means incorporate ballistic calculation means.

22. Use of the aiming device according to any of claims 1 to 21 by an operator from a ship or an offshore platform for the detection and neutralization of sea, land or aerial targets.
